(19) Europäisches Patentamt
European Patent Office
Office européen des brevets

(11) **EP 4 752 786 A1**

(12) **EUROPEAN PATENT APPLICATION**

(43) Date of publication:
03.06.2026 Bulletin 2026/23

(21) Application number: 25217918.9

(22) Date of filing: 24.11.2025

(51) International Patent Classification (IPC):
**G06N 3/045** (2023.01)     **G06N 3/0495** (2023.01)
**G06N 3/084** (2023.01)

(52) Cooperative Patent Classification (CPC):
**G06N 3/045; G06N 3/0495; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 28.11.2024 FI 20246399

(71) Applicant: **Nokia Solutions and Networks Oy
02610 Espoo (FI)**

(72) Inventors:
• **QENDRO, Lorena
  Cambridge (GB)**
• **ACER, Utku Gunay
  Antwerp (BE)**
• **MONTANARI, Alessandro
  Cambridge (GB)**

(74) Representative: **Bryers Intellectual Property Ltd
Bristol & Bath Science Park
Dirac Crescent, Emerson's Green
Bristol BS16 7FR (GB)**

(54) **ADAPTIVE REAL-TIME ADJUSTMENTS IN DEEP NEURAL NETWORKS**

(57) In some embodiments, there may be provided a method that includes In some embodiments, there may be provided a method that includes receiving an indication to perform a single class inference task using a machine learning model that is trained to perform a multi-class inference task; in response to the indication, applying, during a timeframe of execution of the machine learning model hosted by the user equipment, at least one mask mapped to the single class inference task; and reconfiguring the machine learning model to a state where the first set of nodes and the second set to perform the multi-class inference task. Related systems, methods, and articles of manufacture are also disclosed.

EP 4 752 786 A1

## Description

**Field**

The subject matter described herein relates machine learning.

**Background**

Machine learning (ML) models may learn via training. The ML model may take a variety of forms, such as an artificial neural network (or neural network, for short), decision trees, and/or the like. Some neural networks may be considered "deep neural networks," which refers to a neural network including at least two hidden layers. The training of the ML model may be supervised (with labeled training data), semi-supervised, or unsupervised. When trained, the ML model may be used to perform an inference task.

**Summary**

In some embodiments, there may be provided a method that includes receiving, by a user equipment, an indication to perform a single class inference task using a machine learning model that is trained to perform a multi-class inference task; in response to the indication, applying, by the user equipment and during a timeframe of execution of the machine learning model hosted by the user equipment, at least one mask mapped to the single class inference task, wherein the at least one mask defines, for the single class inference task a first set of nodes at the machine learning model activated to perform the single class inference task and a second set of nodes at the machine learning model deactivated while performing the single class inference task; and reconfiguring, by the user equipment, the machine learning model to a state where the first set of nodes and the second set to perform the multi-class inference task.

In some variations, one or more of the features disclosed herein including the following features can optionally be included in any feasible combination. The machine learning model may be trained at least in part to perform the multi-class inference task before being deployed to the user equipment. The indication to perform the single class inference task using the machine learning model may be received from at least one another user equipment requesting the single class inference task. The indication to perform the single class inference task using the machine learning model may be received in response to the single class inference task being detected by the user equipment. The timeframe may be a pre-determined period of

time or a time when the single class inference task is no longer an inference task inferred by the user equipment. The at least one mask may be learned by providing, to the machine learning model, samples for classification as the single class inference task and profiling a plurality of nodes of the machine learning model to determine the second set of nodes not associated with classification by the machine learning model of the single class inference task. The weights of the second set of nodes may be below a threshold value indicating that the second set of nodes are not associated with the classification of the single class inference task. In response to the reconfiguring, the machine learning model may perform the multi-class inference task. In in response to applying the at least one mask, the machine learning model may be executed to perform the single class inference task, wherein the first set of nodes are executed to perform the single class inference task and the second set of nodes are deactivated and not executed while performing the single class inference task.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

**Description of Drawings**

In the drawings,

FIG. 1 depicts example scenarios in which a machine learning model may be optimized, in accordance with some embodiments.
FIG. 2 depicts an example of an apparatus including at least one machine learning model, in accordance with some embodiments;
FIG. 3A depicts an example of a machine learning model, in accordance with some embodiments;
FIG. 3B depicts an example of the machine learning model of FIG. 3A with certain nodes temporarily deactivated based on a mask, in accordance with some embodiments;
FIG. 4 depicts an example of a process for optimizing machine learning models, in accordance with some embodiments;

FIG. 5 depicts another example of a process for optimizing machine learning models, in accordance with some embodiments; and

FIG. 6 depicts an example of a computing system, in accordance with some embodiments.

Like labels are used to refer to same or similar items in the drawings.

**Detailed Description**

Most machine learning (ML) models, such as neural networks, deep neural networks and/or the like, have a fixed structure with respect to the architecture of the ML model (so, e.g., the layers and nodes at each layer is fixed). And, this fixed ML model structure is executed across all of the layers and nodes to perform the inference task, such as classification of an input. When used for classification tasks, the ML model's fixed structure cannot during execution disregard classes that are not of interest. In other words, even if only a single class is to be classified by the ML model, the ML model cannot adapt its structure given the need to only infer a single class, so the entire ML model is still executed.

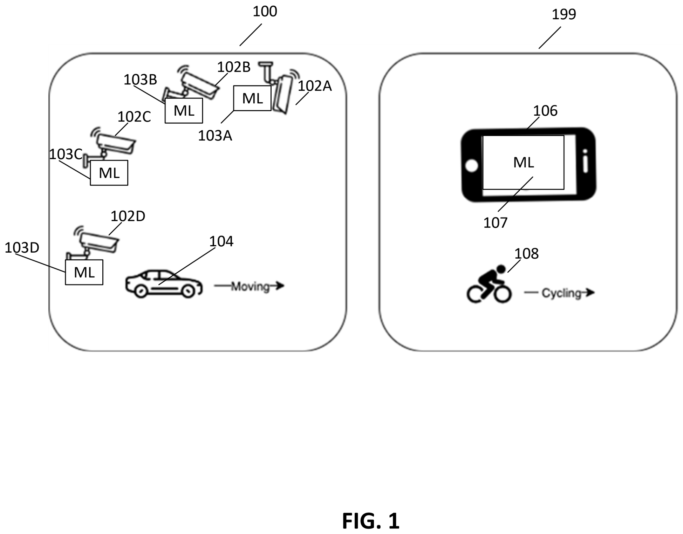

FIG. 1 depicts two examples of scenarios in which the ML model operates in a less than optimum condition and thus uses excessive processing resources, wastes energy, and realizes inference latency, in accordance with some embodiments.

Referring to FIG. 1 at system 100, a plurality of devices 102A-D (which in this example represent video cameras although other types of sensors or sources of data may be implemented as well) cooperate in a distributed environment. Each of these devices 102A-D is equipped with at least one machine learning (ML) model 103A-D, such as a neural network, a deep neural network, and/or the like, trained to perform, for example, a task, such as classifying an object, automatic object detection, and/or other types of inference tasks.

In the configuration of 100, the devices 102A-D may experience a certain spatial locality in the detected classes, wherein, within a certain time period, the same object (or objects), such as a car 104, is likely to be detected by all of the devices 102A-D at some point in time as the car 104 travels through the region (which in this example are video cameras each with a corresponding ML model for automatic object detection and/or classification). In this example, the devices 102A-D may be configured in a cooperative manner, in which the devices 102A-D can signal each other to for example assist in the inference task. To illustrate by way of an example, consider a classification task in which the devices 102A-D (each of which comprises a camera and further includes a corresponding ML model 103A-D) are configured to detect a certain type or class of object, such as the following four classes: vans, cars, bicycles, and pedestrians (or people). In this example, the first device 102D (including ML model 103D) recognizes the car 104 and wants to continue tracking the car 104. As such, the first device 102D signals one or more of the other devices 102A-C to cooperate and thus assist in detecting or recognizing the class of the car 104. As the interest is only in the class "car," there is no need to unnecessarily consume resources at the other devices 102A-C to detect the other classes, which in this example are vans, bicycles, and pedestrians.

Another use case from the scenario of 100 may emerge when the first device comprising device 102D, for example, classifies the car 104 as a "car" but the first device's ML model 103D is uncertain about the car's classification (e.g., a low confidence for the car classification below a threshold confidence amount). This low confidence classification of the car 104 may be caused by a variety of factors, such as noise in the image, camera orientation or rotation, lighting, and/or other reasons. In this example, the other devices 102A-C have a different view of the car 104, so the distributed, cooperative system of other devices may be able to assist in further classifying the car 104 and, as such, increase the overall confidence of the classification (e.g., to a confidence for the car classification above a threshold confidence amount) of the car 104. As in the previous example, the ML models 103A-C of the other devices 102A-C only need to perform the task of classifying cars and not waste computational resources on classifying objects, such as vans, bikes, or pedestrians.

In another scenario at system 199 (FIG. 1), a single device 106, such as a smartphone with one or more sensors, may further include at least one ML model 107. In the example of FIG. 1, the device 106 is equipped with the ML model 107 that uses sensor data (obtained from the device 106 or other sources) to for example predict human activity. In this example, there is a temporal locality, such that when a user starts an activity, the user is likely to keep doing the activity for a period of time. For example, if the user starts cycling 108 and cycles for a certain amount of time (e.g., 2 minutes or other time periods as well), the likelihood that the user will continue the cycling activity for the next time frame(s) (e.g., the next 2, 4, or other time periods as well) are highly likely. To avoid wasting compute time and resources, the ML model 107 may be optimized to detect only the "cycling" classification, so when the ML model 107 stops detecting the "cycling" activity, the ML model 107 can resume multi-class classification (e.g., exercising, cycling, running walking, etc.).

In some embodiments, there is provided a way to use spatial locality and/or temporal locality to allow an ML model to reduce its resource utilization by at least avoiding, for example, classification computations for classes that are not likely to be present, which may reduce inference latency (e.g., the time it takes the ML model to perform an inference task), reduce energy consumption, and reduce device resource utilization (e.g., in terms of processing and/or memory resources at the device).

As noted, a ML model, such as a deep neural network, may be considered a monolithic structure that need to execute end-to-end (e.g., all of its layers and nodes) to perform the inference task, so the ML model fully executes across all nodes given an input in order to generate an output for the inference task. As such, resources may be unnecessarily consumed by the ML model for each and every inference computation.

In some embodiments, there is provided a way to for example reduce inference latency and reduce consumed energy and resources by a ML model, when not all classes (e.g., when the inference tasks are classification tasks) are needed as illustrated by the examples of FIG. 1. In some embodiments, an ML model is adaptively configured so that one or more nodes of the ML model are de-activated, based on a mask, for execution, such that the activated nodes are needed to perform the classification task, while the de-activated nodes are not needed to perform the classification task. This adaption is temporary to take into account the noted spatial and/or temporalty locality, such that the ML model can return to its original un-adapted state (e.g., the de-activated nodes are activated) to enable the ML to perform a fuller multi-class classification. Moreover, the adaption may be in real-time in the sense that the adaptation is triggered as needed as shown by the examples of FIG. 1. In the adapted state (with, e.g., one or more nodes de-activated), the ML model temporarily computes only certain classes (e.g., a single class such as car as noted in the example of FIG. 1), while not executing other classes (e.g., the van, cycle, and pedestrian classes of FIG. 1).

In some embodiments, the ML model is configured, such that the computations related to the inference task are optimized, when not all of the classes are needed. This optimization is provided by at least one or more masks for each class. The mask for a given class may be activated (or, e.g., de-activated) at runtime execution of the ML model to ensure that only certain classes are computed by the ML model. This process may ensure ML model optimization with respect to both the inference latency, computational resources, and/or energy consumption. In other words, this is a novel way to save runtime resources by running only a part of the ML model that is responsible for inference of a specific class (or classes).

To determine a mask for a class, a profiling technique may be performed on the ML models 103A-D at 100 (and/or the ML model 107), with only a small sample of input data. For example, the mask is determined by learning which activations (e.g., nodes of the neural network) are used or necessary for performance of the specific classification that is needed. Referring to the "car" classification example above, the mask may indicate one or more ML model nodes that can be temporarily deactivated while the ML model is only performing the car classification task (as the de-activated nodes are not needed for that task).

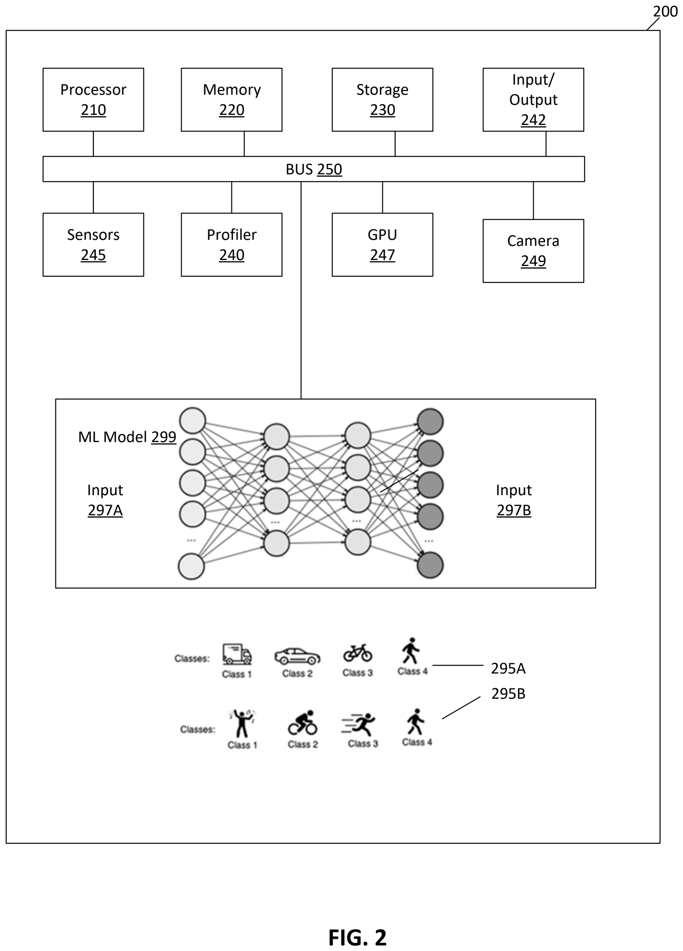

Before providing additional description regarding the ML model optimization and adaptation disclosed herein, an example apparatus 200 (also referred to herein as user equipment) including a ML model 299 is described with reference to FIG. 2. Referring to FIG. 2, the apparatus 200 may be comprised in the devices 102A-D, the device 106, and/or other processor-based devices which can host a ML model.

The apparatus 200 may include one or more of the following: at least one processor 210, such as central processing unit and/or the like, at least one memory 220, at least one storage device 230, at least one input and/or output device 242, at least one sensor 245, at least one graphics processing unit 247, and at least one camera 249, all of which may be coupled via a bus 250.

As shown in FIG. 2, the processor 210 is capable of processing instructions for execution within the apparatus 200. In some implementations of the current subject matter, the processor 210 can be a single-threaded processor. Alternately, the processor 210 can be a multi-threaded processor. The processor may be a multi-core processor having a plurality or processors or a single core processor. The processor 210 is capable of processing instructions stored in the memory 220 and/or on the storage device 230 and/or capable of generating display of information for a user interface provided via the input/output device 242. The memory 220 is a computer readable medium, such as volatile and/or non-volatile, that stores information within the apparatus 200. The memory 220 can store data structures representing the nodes of the ML model (e.g., parameters, such as weights and/or other configuration information for at least one ML model). The storage device 230 may be capable of providing persistent storage for the apparatus 200. The storage device 230 may be any type of storage device (e.g., a hard disk device, an optical disk device, and/or other suitable persistent storage or memory mechanisms). The input/output device 242 provides input/output operations for the apparatus 200. In some implementations of the current subject matter, the input/output device 242 includes a keyboard and/or pointing device. In various implementations, the input/output device 242 includes a display unit for displaying graphical user interfaces. According to some implementations of the current subject matter, the input/output device 2420 can provide input/output operations for a network device (e.g., to couple to a network, bus, and/or the like). For example, the input/output device 242 can include Ethernet or WiFi ports or other networking ports to communicate with one or more wired and/or wireless networks (e.g., a local area network (LAN), a wide area network (WAN), the Internet).

The apparatus 200 may include at least one graphics processing unit 247. The GPUs may be used in the execution of the ML model 299. Alternatively, or additionally, the at least one graphics processing unit 247 may comprise an AI chip and/or the like.

In the example of FIG. 2, the apparatus 200 may include one or more sensors. For example, the sensors may include an accelerometer, a gyroscope, an ECG sensor, a heart rate sensor, a blood glucose sensor, an EMG sensor, and/or other types of sensors. In the example of FIG. 2, the apparatus also includes a camera 249, such as a video, a still camera, an infrared camera, and/or the like. The sensors may provide an input 297A to the ML model 299, although the inputs may be obtained from other sources as well.

FIG. 2 also depicts an example of a ML model 299 hosted at the apparatus 200. The ML model 299 may be comprised in each of the ML models 103A-D and/or 107 of FIG. 1, for example. The structure and type of the ML model 299 is merely an example as other types and structures may be used as well.

The ML model 299 may be trained to perform an inference task, such as a perform multiple classifications on data provided at the input 297A. As noted, the data provided at the input may comprise a variety of types of data based on the inference task being performed by the ML model. For example, the input data may comprise images, sensor data, and/or the like. The classification task refers to classifying an object (which is presented at the input 297A) as being a member of at least one class, such as a car, pedestrian, and/or other type of classification. The classification may be indicated by the output 297B of the ML model. As noted in the examples describes with respect to FIG. 1, the ML model 299 may output 297B an indication of the classification of an input 297A. For example, given an image of a car, the ML model 299 may output an indication that the classification of the image is "car." FIG. 2 depicts examples of classes 295A, such as truck, car, bike, person, exercising, cycling, running, and walking, as well as classes 295B, such as exercising, cycling, running, or walking. These classes are merely examples as other classes may be classified by the ML model. And, although a certain quantity of classes is depicted at FIG. 2 for classification, the ML model may be trained to infer more or fewer classes as well.

Although some of the examples refer to the ML model used in training and inference as a deep neural network, other types of ML models may be used as well. For example, the ML model may comprise a variety of ML model types including one or more of the following: a neural network, a convolutional neural network, decision tree(s), graph neural network(s), and/or other types of machine learning models which include nodes or a path that can be activated and deactivated as disclosed herein, as well as other inference types such as clustering and regression too.

In the case of ML models, there may be a training phase during (during which the ML model is trained to perform a task, such as inference task) and an inference phase (during which the ML model performs the inference task). An example of an inference task is classification of an object into one or more classes. For example, a classification task may classify input data representative of an object as van, car, monkey, and/or any other type of object.

In the case of supervised learning for example, the ML model is trained by providing at the input 297A to the ML model 299 examples of what is (and/or what is not) an object in the class. In the example of a car classification, the ML model may receive inputs from a training set, such as examples of images including cars (as well as other types of images), until the ML model's output 297B learns to recognize the "car" class of objects. Once trained, the ML model can then proceed to perform the inference task on for example other images outside the training set to recognize the classification of a "car" for example presented as the input 297A to the ML model 299.

In the case of training the ML model 299, the training process includes at least (1) deploying a ML model, such as ML model 299, to the devices, such as devices 102A-D and/or 106 and (2) profiling the ML model at the corresponding device hosting the ML model.

In some example embodiments, the ML models are provided, as noted, to the one or more of the devices hosting the ML models. For example, ML models (which may be trained to perform a multiclass classification inference task) are provided to the devices. Referring to FIGs. 1-2 for example, the devices 102A-D may each be provided with a ML model, such as the ML models 103A-D, trained to classify multiple classes as shown at classes 295A. Likewise, the device 106 may be provided with the ML model 107 trained to classify multiple classes as shown at classes 295B.

In some embodiments, the ML models 103A-D and/or 107 are pre-trained and then deployed to the devices 102A-D and/or 106, although some training and/or retraining may occur after deployment to the devices.

In some embodiments, some (if not all) of the ML models 103A-D operate in a distributed or cooperative manner as described with respect to system 100 at FIG. 1. Moreover, some (if not all) of the ML models 103A-D may be the same with respect to structure (e.g., quantity of nodes, quantity of layers, interconnections, etc.) and/or configuration (e.g., the weights of each of the nodes, etc.). Alternatively, or additionally, some (if not all) of the ML models 103A-D may be different with respect to the structure and/or the configuration. Moreover, some (if not all) of the ML models may be similarly trained to classify some (if not all) of the same types of objects. Referring to the example of FIG. 2 for example, the ML models 103A-D may each be trained to classify an input image as for example a truck class, a car class, a bike class, or a person class (see, e.g., classes 295A). While the ML model 107 may be trained to classify an input image as for example a cycling, running, walking, etc. (see, e.g., classes 295B).

In some embodiments, the profiler 240 may perform profiling of a ML model to determine which nodes of the ML model are (or are not) needed to perform a classification. For example, the profiler 240 may use a relatively small set of examples for each of the classes of the ML model.

Referring to the example of FIG. 2, the profiler 240 may provide, as input 297A, a set of samples inputs for each class of the multiple classes that the ML model 299 is trained to classify. Given classes 295A 1-4 for example, the profiler may provide, at the input 297A, samples of class 1 (e.g., 100 truck images or other quantities as well), samples of class 2 (e.g., 100 car images or other quantities as well), samples of class 3 (e.g., 100 cycle images or other quantities as well), and samples of class 4 (e.g., 100 people images or other quantities as well). These samples enable the profiler to learn which nodes of the ML model are (or are not) needed to perform a each of the classifications. In other words, the weight of a given node of a neural network may indicate whether certain nodes contribute to the classification of a given class.

For each of the classes which can be classified by the ML model, the profiler 240 determines (e.g., learns) a mask (also referred to as "node mask"). The mask represents a path (e.g., which node(s)) in the ML model 299 activate for a specific class. Referring to the previous example of 4 classes, the profiler 240 determines a mask for the first class, a mask for the second class, a mask for the third class, and a mask for the fourth class.

To illustrate further, the profiler functions as a selective gating mechanism within the ML model, such as a deep neural network. As such, the profiler systematically evaluates each node's contribution to the ML model's inference task, such as the classification task's performance. For a given input sample for example, the profiler analyzes the effect of each node on the output logits by modulating its activation and thus allowing the profiler to measure the node's impact on the classification decision. This assessment may be conducted by calculating the node's influence on the model's loss function with respect to the target class, thereby identifying the nodes that are critical for minimizing classification error.

Through iterative adjustments, the profiler may update a mask that dynamically regulates each node's activation. Nodes that consistently demonstrate a significant influence on minimizing the loss are reinforced, while those that show minimal impact are selectively suppressed. Rather than applying a hard threshold, this process leverages gradient-based optimization to fine-tune each node's contribution, optimizing the mask values in a continuous manner. The result is a sparse representation where only the most informative nodes remain active, effectively pruning the network while preserving its predictive accuracy.

By constructing a task-specific mask, the profiler enables a more compact and efficient model, where computational resources are focused on nodes that provide the greatest contribution to the target classification. This selective activation aligns with principles of model compression and interpretability, facilitating an efficient yet robust network tailored for accurate classification.

The determined node mask(s) may then be stored at for example the device, such as in the storage device 230 or in memory 220 (e.g., stored in a structured way, such as a database, or unstructured as in an object store), although the node masks may be stored in other locations as well.

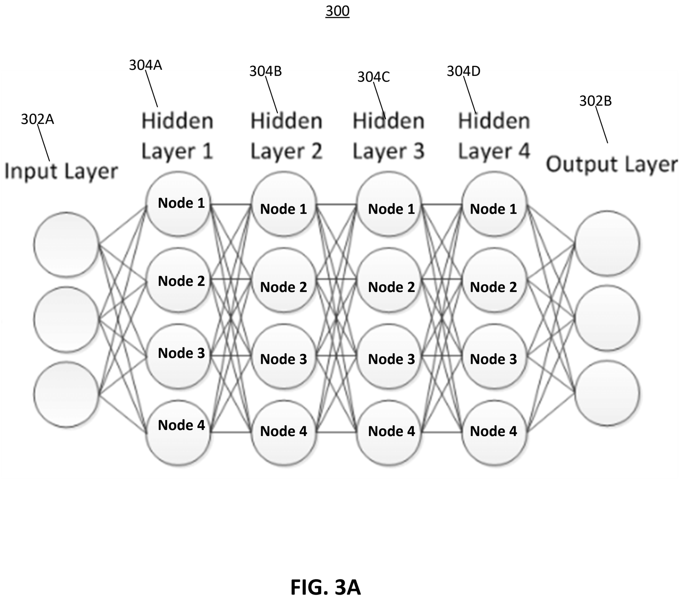

Table 1 below depicts an example of a node mask for two classes, class 1 and class 2, although the node mask may include additional classes and layers based on the ML model structure. FIG. 3A depicts a corresponding ML model 300 to which the node mask of Table 1 may be applied. FIG. 3A depicts a ML model 300 configured as a deep neural network, for example. The ML model includes 4 hidden layers 304A-B and each layer includes 4 nodes (labeled 1-4), although other ML model structures may be implemented. The input is provided at the input layer 302A and the output is provided by the output layer 302B.

Referring to Table 1 and FIG. 3A-3B and assuming the ML model 300 classifies two classes for example, for class 1, the layer 1 node mask values 0.2, 0.3, 0.0, 0.4 may indicate that the Node 3 at layer 1 can be de-activated during execution. In this example, mask values below a threshold amount, such as 0.1 indicate that the corresponding node may be deactivated, although other thresholds or de-activation methods may be used as well. For layer 2, the mask values 0.5, 0.4, 0.2, 0.3 may indicate that none of the nodes should be de-activated during execution. For layer 3, the mask values 0.0, 0.2, 0.0, 0.3 indicate that the Node 1 should be deactivated for execution, and so forth through the classes and layers. Although the previous example used 2 classes and 4 nodes, this is merely an example as other classes, layers, and nodes may be used as well.

In the example of Table 1 for example, the mask values are obtained by iteratively adjusting each node's mask value based on its contribution to reducing the classification loss for a given class. To illustrate further, these values are updated using gradients of the loss with respect to each node's mask, guided by an optimizer (e.g., a stochastic gradient descent (SGD) or other type of optimizer). This adjustment process may thus identify the importance of each node for accurate classification to assist in determining which nodes should remain active or be deactivated. While the mask values might resemble "weights," they do not function as typical model weights, but the mask values act more like binary or scaled indicators that selectively enable or disable specific nodes, thereby creating a custom structure for the model that's optimized for the target class.

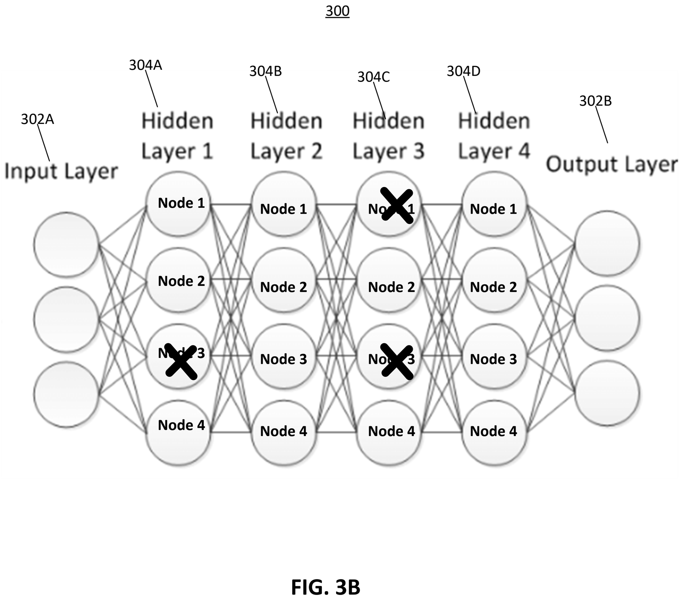

At runtime of the ML model 300, the ML model 300 may have certain nodes de-activated in accordance with the node mask values. Referring to the previous example and considering a single class 1 inference task for ML model 300, the ML model would deactivate (as indicated by the "x") the nodes depicted at FIG. 3B. As such, during execution of ML model 300, node 3 at layer 1 and nodes 1 and 3 at layer 3 would be deactivated in response to the mask of Table 1 where the ML model is only classifying "Class 1", while the other nodes would be active and thus execute during runtime to infer class 1 given an input layer 302A. As noted, when the ML model returns to multi-class, the ML model would re-activate node 3 at layer 1 and nodes 1 and 3 at layer 3. Likewise, if the ML model needed to only infer class 2, the mask of Table 1 would cause node 2 at layer 2 and nodes 2 and 3 at layer 4 to be temporarily de-activated during runtime.

Table 1

| Classes | Layer | Node Mask Values [Node 1, Node 2, Node 3, Node 4] |
|---|---|---|
| Class 1 | 1 | [0.2, 0.3, **0.0**, 0.4] |
| | 2 | [0.5, 0.4, 0.2, 0.3] |
| | 3 | [**0.0**, 0.2, **0.0**, 0.3] |
| | 4 | [0.8, 0.7, 0.6, 0.5] |
| Class 2 | 1 | [0.7, 0.6, 0.9, 0.4] |
| | 2 | [0.4, 0.0, 0.8, 0.3] |
| | 3 | [0.9, 0.8, 0.7, 0.6] |
| | 4 | [0.3, **0.0**, **0.0**, 0.5] |

In some implementations, the some of the devices, such as the devices 102A-D, may each include a corresponding ML model 103A-D, wherein each device has the same ML model architecture, such as the ML model 299, but the ML models 103 A-D may have different configurations, such as weights at the nodes. Alternatively, or additionally, some of the devices, such as device 102A-D, may each include a corresponding ML model 103A-D with different ML model architectures. In either case, the profiler 240 may profile each ML model at each device separately, so each ML model is provided with a different mask. However, if some of the devices, such as device 102A-D, include the same ML model 103A-D architecture and the same ML model architecture and configuration, the profiler 240 may perform a single profiling and the same mask may be used across all of the ML models 103A-D.

When the ML models are trained and profiled, so a mask ("node mask") is determined, the ML models may be used during inference to optimize operation of an ML model by adapting which nodes of the ML model are activated or deactivated as depicted at FIG. 3B to perform a given classification.

In operation during inference, the devices 102A-D may initially perform their inference tasks across all of the classes for which the ML models have been trained. For example, ML models 103A-D may classify all for classes, such as van, car, bike, and pedestrian (see, e.g., classed 295A).

Supposing for example, a device, such as device 102D, wants the other cooperative devices, such as the devices 102A-C, to check for cars for a certain timeframe (which may, e.g., a pre-determined time, a configurable time, and/or determined or set in other ways). This may be due to for example the device 102D seeking confirmation of car 104 being classified (with a low confidence by the device 102D or for other reasons. When this is the case, the device 102D may send an indication to signal the other devices 102A-C to check for a specific class (i.e., detect only for car class) for the timeframe (e.g., the next 60 seconds or other times as well). As noted, the device 102D may send the indication to the other devices when the device 102D wants to check if a sample (which is obtained by the device 102D) is classified properly in case their prediction entropy is high and the sample is classified with low confidence, for example. For example, the ML model 103D at the device 102D may classify the object as with class car or class van with a low confidence value (e.g., below a threshold amount). In any case, when at least one of the other devices 102A-C confirms within the timeframe that the object, such as car 104, is a car class by responding to device 102D, the devices 102A-D may return to detecting all of their configured classes. Alternatively, or additionally, the timeframe may lapse without a response by the other devices 102A-C to the device 102D, in which case the devices 102A-D may return to detecting all of their configured classes. Moreover, the process of signaling and coordination among the device may be repeated by for example any device of the group of devices 102A-D.

In the use case with only a single device, such as the device 106, the noted process may be used as well. For example, when the device 106 detects a specific class of activity, such as running (see, e.g., classes 295B), the device 106 may not be interested in classifying, for example, inputs as a cycling class for a certain timeframe, so only the nodes associated with the running classification may be activated while other nodes of the ML model can be deactivated using the mask. And when the timeframe ends, the device 106 including ML model 107 may return to a state in which all classes 295B are detected, for example.

During inference, when a device enters an optimized state where a specific class is being classified, the device may retrieve a mask for that class. For example, the device may retrieve the class 1's specific mask as shown in the example at Table 1.

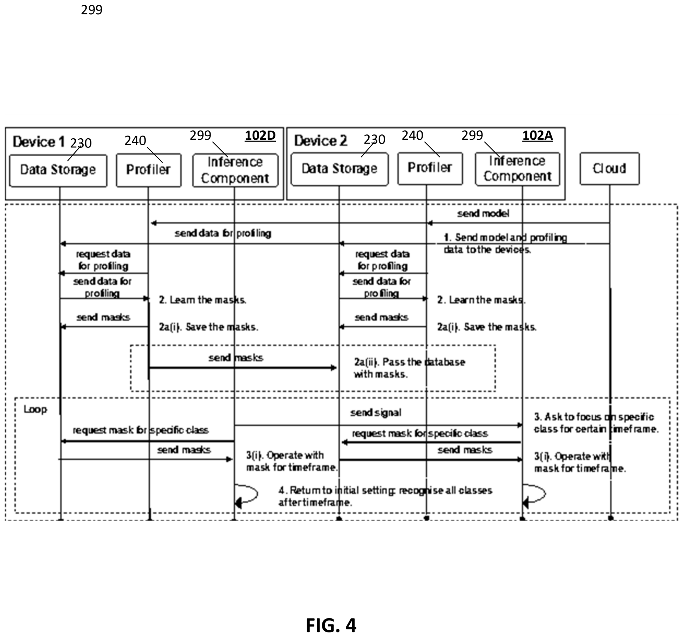

FIG. 4 depicts an example of a process for adapting ML models by deactivating nodes based on a mask, in accordance with some embodiments. FIG. 4 includes a first device 102D and a second device 102A, each of which may include for example storage device 230, profiler 240, and an ML model 299 (labeled inference component). Although FIG.

4 depicts a certain quantity and configuration of devices, this is an example to illustrate the process as other device quantities and device configurations may be used as well.

In the example of FIG. 4 a cloud server 404 may provide (at 0) the ML model(s) to the first device 102D and the second device 102A. And, the cloud server 404 may provide (at 1) profiling data (e.g., samples of each class) to be used by the profiler 240 to profile the ML model at each device. The profiling data may be stored in for example storage device 230. Although the example of FIG. 4 depicts the cloud server 404 providing the ML models to the devices 102A and 102D, the ML models may be provided in other ways as well.

At 2, the masks are learned for the first device 102D and the second device 102A. For example, the profiler 240 may request from storage device 230 the data (e.g., samples of each class) to profile the ML model 299, and the data storage may respond by sending the requested data to be used to profile the ML model. For example, the data samples used to profile the ML model may include a relatively small subset of samples per class as noted above (e.g., 100 samples of class 1, 100 samples of claims 2, etc.). The profiler 240 uses the data samples to learn the mask (see, e.g., Table 1), such that the mask indicates which nodes need to be activated (and/or which nodes can be deactivated) to perform a given classification task. When the mask is learned, the profiler may save and store the masks in the storage device 230. In the example of FIG. 4, each device 102A and 102D may perform its own profiling, but if the devices have the same structure and configuration, a single mask may be determined by one of the devices and shared with the other device (see, e.g., 2a(ii)).

As noted above, the ML models 299 at each device 102A and 102D may operate such that it performs an inference task across all of its trained classes, in which all of the nodes at each layer would be activated. However, when there is an opportunity (e.g., due to spatial locality or temporal locality) to optimize the ML model 299 so it classifies a single class rather than all of its trained classes. For example, device 102D may, at 3, request device 102A to focus on a specific class, such as the "car" class noted above with respect to FIG. 1. In the example of FIG. 4, the ML model 299 at device 102D sends a signal to indicate to the ML model 299 at the device 102A to focus on a specific class rather than infer all of the class (e.g., focus on inferring only the car class rather than all 4 classes 295A). In response, the masks may be requested by the ML models 299 from the storage device 230, which sends the mask to the ML model 299.

At 3, each of the ML models 299 deactivate one or more nodes based on the mask. Referring to FIG. 3B for example, during execution of the ML models, node 3 at layer 1 and nodes 1 and 3 at layer 3 would be deactivated in response to the mask of Table 1 where the ML model is only classifying "Class 1", while the other nodes would be active and thus execute during runtime to infer class 1 given an input. As noted, the deactivation of these nodes may be for a given timeframe, although the return to all nodes active may be triggered in other ways as well. As the de-activation of the nodes is temporary, the ML models may return, at 4, to a state where all of the nodes are active to enable classification of all of the trained classes, such as class 1-4 at classes 295A, for example.

As noted, each of the processor-based devices, such as devices 102A-D, 106, and 200 may include a pretrained ML model configured to perform a specific classification task, such as a multi-class classifier. Consider thus a classification problem, wherein x denotes the input and y is an element ($\in$) of {1, ..., C} a corresponding target class taking one of the C classes. Formally, the ML model, such as a neural network, may be represented as follows:

$$y = f(x, W),$$

wherein W are the weights of the nodes of the trained ML model deployed on a processor-based devices, such as a user equipment, such as a smartphone, a camera, a wearable device, and/or the like.

To isolate specific classes during the inference phase of an ML model, the ML model is, as noted profiled by the profiler 240 to determine a mask (see, e.g., Table 1) for each of the classes. This process may be performed on the processor-based device itself as it is a very lightweight learning phase performed with a small subset of data, as noted above, although the mask may be determined off device as well and provided to the device.

For profiling and mask learning, the device is, as noted, provided with a set of examples for each of the classes. These examples may be sent (e.g., from another device or cloud server) to the device with an initial ML model. This allows the device to learn a binary mask ($M^c$) per class (for some if not all of the layers of the ML model), wherein the only values learned for the mask are the $M^c$ while the original pretrained weights W of the ML model remain unchanged. As such, the outputs are computed as follows:

$$y = f(x, W \odot M^c),$$

wherein $\odot$ denotes an elementwise product. To learn the mask $M^c$, a loss function $\mathcal{L}$ is minimized between the original prediction and the masked prediction as follows:

$$\min_{M^c} \mathcal{L}\left(f(x,\ W),\ f(x, W \odot M^c)\right) \ . \quad (1)$$

The gradients for the mask $M^c$ may be computed as follows:

$$\frac{\delta \mathcal{L}^c}{\delta M^c} = \frac{\delta \mathcal{L}}{\delta M^c} + \gamma \ * \ sign(\ M^c), \qquad (2)$$

wherein $\gamma$ is a weighting factor.

An example of an algorithm to learn the mask is depicted at Table 2. The mask creation process may be a fine-tuning mechanism that selectively enables or disables nodes in the ML model based on their contribution to accurate predictions. By iteratively adjusting the mask to balance between prediction accuracy and node usage, a mask is determined, such that the mask maintains classification performance with potentially fewer active nodes. This can make the ML model more efficient while still ensuring it performs well on the target class.

To illustrate further, the mask creation process may begin by initializing a mask with all nodes active, allowing the full ML model to make predictions. For each sample of the target class, a prediction is made using the entire network, identifying the predicted class. Next, the loss is calculated, along with the gradients of the loss with respect to each mask value, revealing each node's contribution to reducing the loss. Using an optimizer (e.g., stochastic gradient descent, SGD), the mask values are adjusted, retaining nodes that lower the loss and deactivating less important ones. After each adjustment, the prediction consistency is checked to ensure the class remains correct; if it changes, the mask adjustment is modified or reverted. Once the loss is minimized and the prediction remains stable, this optimized mask is finalized, selectively activating nodes essential for accurate classification and enhancing model efficiency without compromising performance.

Table 2

| Given: Input $X^c$, deployed model f(x), $M^c$ initialized to 1(all nodes active), optimizer (such as stochastic gradient descent, SGD) |
| --- |
| **Find:** $M^c$ that guarantees the minimum loss |
| for $x_i$ in $X^c$: |
|    prediction class c = argmax f(x, W) |
|    get loss $\mathcal{L}_i{}^c$ with Eq.1 |
|    get mask $M_i{}^c$ gradients with Eq.2 |
|    update $M_i{}^c$ with SGD optimizer |
|    new prediction class c_ = argmax f(x, W $\odot$ $M^c$) |
|    if c = c_ then keep same prediction |
|      if loss $\mathcal{L}_i{}^c$ is minimum then |
|        $M^c = M_i{}^c$ |

The learned masks for each class of the ML model(s) may be used to adapt a corresponding ML model and thus optimize the ML model. In some embodiments, a threshold value $\alpha$ can be applied to the mask values of Table 1 to decide a final path of the ML model nodes for a specific class. The threshold $\alpha$ may be determined or informed in various ways, such as by value and/or by computation. In the case of by value, the threshold value $\alpha$ may be informed by for example, discarding the mask values below the threshold value and closer to for example "0.0", which means that that the corresponding node (which is below the threshold value and closer to "0.0") does not bring any prediction weight to the class prediction. For example, $\alpha$ can be set to 0.2, in which case any node with a value below $\alpha$ will be discarded (i.e., adaptively de-activated) from the ML model computation for the class. By computation, the threshold $\alpha$ may be informed by for example deciding on a threshold using an energy, entropy, or some other sensitivity indication of whether a node contributes to the predication of a specific class.

After the initial mask creation (which may only need to be performed once for a group of classes of an ML model), the masks may be used to adapt which nodes are activated and which are de-activated at the ML model (which is trained for multi-class classification) during execution for a specific class inference.

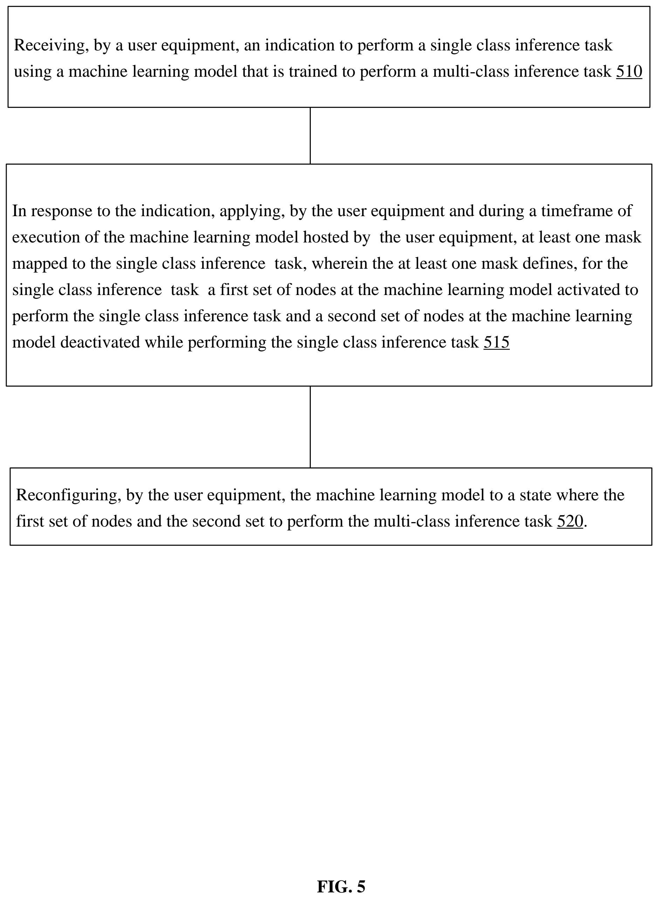

FIG. 5 depicts an example of a process for adaptively optimizing a ML model, such as a neural network, using a mask, in accordance with some embodiments.

At 510, the process may include receiving, by a user equipment, an indication to perform a single class inference task using a machine learning model that is trained to perform a multi-class inference task, in accordance with some embodiments. Referring to the example of FIG. 4, the device 102A may receive (from device 102D) an indication (see, e.g., "send signal" 3 at FIG. 4). When this is the case, the device 102A may choose to focus on a specific class (e.g., "car" classification) from the multiple classes the ML model 299 is able to classify.

At 515, the process may include in response to the indication, applying, by the user equipment and during a timeframe of execution of the machine learning model hosted by the user equipment, at least one mask mapped to the single class inference task, wherein the at least one mask defines, for the single class inference task a first set of nodes at the machine learning model activated to perform the single class inference task and a second set of nodes at the machine learning model deactivated while performing the single class inference task, in accordance with some embodiments. Referring to the example of FIG. 4, when the indication of 510 is received, the device 102A may apply a mask. For example, the mask (which is specific to for example the "car" inference classification task associated with the indication) may be obtained from the storage device 230 and used at the ML model 299 at device 102A. Moreover, the mask defines, for the single class inference task, which nodes of the machine learning model are activated during execution of the ML model 299 to perform the single class inference task. And, the mask may define or indicate which nodes at the ML model 299 should be deactivated while performing the single class inference task. Table 1 and FIG. 3B further illustrate examples of masks and the dynamic activation and de-activation of nodes. Further, the activation and de-activation may be for a timeframe, after which all of the nodes of the ML model are active so the ML model 299 can return to multiclass classifications.

At 520, the process may include reconfiguring, by the user equipment, the machine learning model to a state where the first set of nodes and the second set to perform the multi-class inference task, in accordance with some embodiments. Referring to the example of FIG. 4, the ML model may return (see, e.g., 4 at FIG. 4) to an initial state or settings, so for example the nodes of the ML model are active and the ML model 299 can return to multiclass classifications.

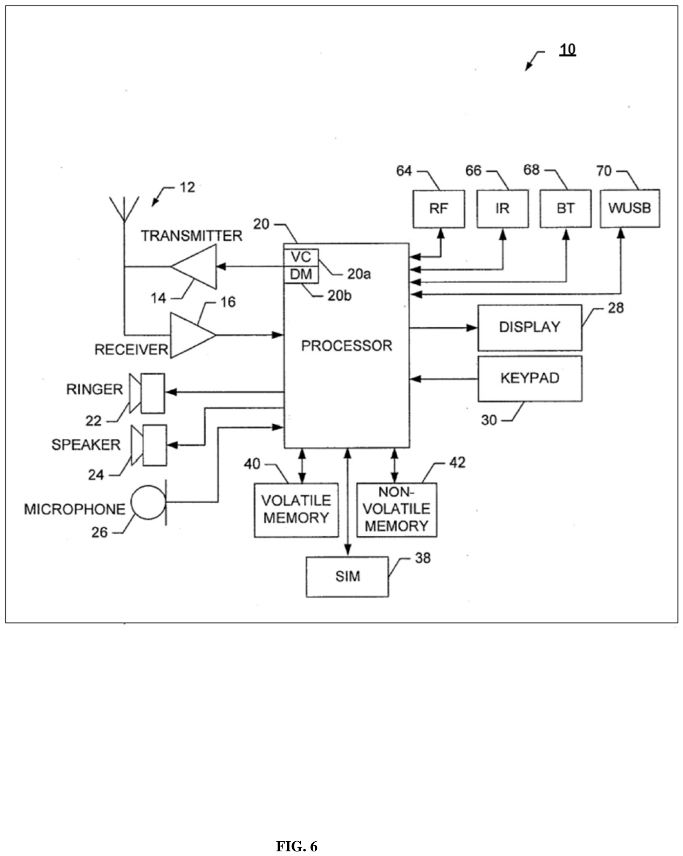

FIG. 6 illustrates a block diagram of an apparatus 10, in accordance with some embodiments. As noted, the machine learning models disclosed may be comprised in the apparatus. The apparatus 10 may comprise or be comprised in a user equipment, such as user equipment (e.g., user entity, PRUs, etc.). In general, the various embodiments of the user equipment can include cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions, in addition for vehicles such as autos and/or truck and aerial vehicles such as manned or unmanned aerial vehicle and as well as portable units or terminals that incorporate combinations of such functions. The user equipment may comprise or be comprised in an IoT device, an Industrial IoT (IIoT) device, and/or the like. In the case of an IoT device or IToT device, the UE may be configured to operate with less resources (in terms of for example power, processing speed, memory, and the like) when compared to a smartphone, for example.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signalling via electrical leads to the transmitter and receiver. Likewise, processor 20 may be configured to control other elements of apparatus 10 by effecting control signalling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 6 as a single processor, in some embodiments the processor 20 may comprise a plurality of processors or processing cores. Alternatively, or additionally, the apparatus 10 may include GPUs, AI chips, and/or other aspects to execute at least in part the ML models as noted above with respect to FIG. 2, for example. Alternatively, or additionally, the apparatus 10 may be coupled to or include sensors, cameras, and/or the like as noted above with respect to FIG. 2, for example.

The apparatus 10 may be capable of operating with one or more air interface standards, communication protocols, modulation types, access types, and/or the like. Signals sent and received by the processor 20 may include signalling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, sixth-generation (6G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, 6G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 6, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a Bluetooth™ (BT) transceiver 68 operating using Bluetooth™ wireless technology, a wireless universal serial bus (USB) transceiver 70, a Bluetooth™ Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, U-SIM, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to the provide operations disclosed herein with respect to the UE, such as the user entity.

Some of the embodiments disclosed herein may be implemented in software, hardware, application logic, or a combination of software, hardware, and application logic. The software, application logic, and/or hardware may reside on memory 40, the control apparatus 20, or electronic components, for example. In some embodiments, the application logic, software or an instruction set is maintained on any one of various conventional computer-readable media. In the context of this document, a "computer-readable storage medium" may be any non-transitory media that can contain, store, communicate, propagate or transport the instructions for use by or in connection with an instruction execution system, apparatus, or device, such as a computer or data processor circuitry; computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein may include a reduction in inference latency (e.g., the time it takes the ML model to perform an inference task), a reduction in energy consumption, and/or a reduction in device resource utilization (e.g., in terms of processing and/or memory resources at the device). Moreover, the ML models may be adapted specifically for a specific inference class which enhances the available resources to perform that specific class.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application.

Example 1. A method comprising:

receiving, by a user equipment, an indication to perform a single class inference task using a machine learning model that is trained to perform a multi-class inference task;

in response to the indication, applying, by the user equipment and during a timeframe of execution of the machine learning model hosted by the user equipment, at least one mask mapped to the single class inference task, wherein the at least one mask defines, for the single class inference task a first set of nodes at the machine learning model activated to perform the single class inference task and a second set of nodes at the machine learning model deactivated while performing the single class inference task; and

reconfiguring, by the user equipment, the machine learning model to a state where the first set of nodes and the second set to perform the multi-class inference task.

Example 2. The method of Example 1, wherein the machine learning model is trained at least in part to perform the multi-class inference task before being deployed to the user equipment.

Example 3. The method of any of Examples 1-2, wherein the indication to perform the single class inference task using the machine learning model is received from at least one another user equipment requesting the single class inference task.

Example 4. The method of any of Examples 1-3, wherein the indication to perform the single class inference task using the machine learning model is received in response to the single class inference task being detected by the user equipment.

Example 5. The method of any of Examples 1-4, wherein the timeframe is a pre-determined period of time or a time when the single class inference task is no longer an inference task inferred by the user equipment.

Example 6. The method of any of Examples 1-5, wherein the at least one mask is learned by providing, to the machine learning model, samples for classification as the single class inference task and profiling a plurality of nodes of the machine learning model to determine the second set of nodes not associated with classification by the machine learning model of the single class inference task.

Example 7. The method of any of Examples 1-6, wherein weights of the second set of nodes are below a threshold value indicating that the second set of nodes are not associated with the classification of the single class inference task.

Example 8. The method of any of Examples 1-7, wherein in response to the reconfiguring, the machine learning model performs the multi-class inference task.

Example 9. The method of any of Examples 1-8, wherein in response to applying the at least one mask, executing the machine learning model to perform the single class inference task, wherein the first set of nodes are executed to perform the single class inference task and the second set of nodes are deactivated and not executed while performing the single class inference task.

Example 10. An apparatus comprising:

at least one processor; and
at least one memory including instructions which when executed by the at least one processor causes operations comprising:
receiving an indication to perform a single class inference task using a machine learning model that is trained to perform a multi-class inference task;
in response to the indication, applying, during a timeframe of execution of the machine learning model hosted by the apparatus, at least one mask mapped to the single class inference task, wherein the at least one mask defines, for the single class inference task a first set of nodes at the machine learning model activated to perform the single class inference task and a second set of nodes at the machine learning model deactivated while performing the single class inference task; and
reconfiguring the machine learning model to a state where the first set of nodes and the second set to perform the multi-class inference task.

Example 11. The apparatus of Example 10, wherein the machine learning model is trained at least in part to perform the multi-class inference task before being deployed to the apparatus.

Example 12. The apparatus of any of Examples 10-11, wherein the indication to perform the single class inference task using the machine learning model is received from at least one another apparatus requesting the single class inference task.

Example 13. The apparatus of any of Examples 10-12, wherein the indication to perform the single class inference task using the machine learning model is received in response to the single class inference task being detected by the apparatus.

Example 14. The apparatus of any of Examples 10-13, wherein the timeframe is a pre-determined period of time or a time when the single class inference task is no longer an inference task inferred by the apparatus.

Example 15. The apparatus of any of Examples 10-14, wherein the at least one mask is learned by providing, to the machine learning model, samples for classification as the single class inference task and profiling a plurality of nodes of the machine learning model to determine the second set of nodes not associated with classification by the machine learning model of the single class inference task.

Example 16. The apparatus of any of Examples 10-15, wherein weights of the second set of nodes are below a threshold value indicating that the second set of nodes are not associated with the classification of the single class inference task.

Example 17. The apparatus of any of Examples 10-16, wherein in response to the reconfiguring, the machine learning model performs the multi-class inference task.

Example 18. The apparatus of any of Examples 10-17, wherein in response to applying the at least one mask, executing the machine learning model to perform the single class inference task, wherein the first set of nodes are executed to perform the single class inference task and the second set of nodes are deactivated and not executed while performing the single class inference task.

Example 19. The apparatus of any of Examples 10-18, wherein the apparatus comprises or is comprised in a user equipment.

Example 20. A non-transitory computer-readable storage medium including instructions which when executed by at least one processor causes operations comprising:

receiving an indication to perform a single class inference task using a machine learning model that is trained to perform a multi-class inference task;
in response to the indication, applying, during a timeframe of execution of the machine learning model hosted by a user equipment, at least one mask mapped to the single class inference task, wherein the at least one mask defines, for the single class inference task a first set of nodes at the machine learning model activated to perform the single class inference task and a second set of nodes at the machine learning model deactivated while performing the single class inference task; and

reconfiguring the machine learning model to a state where the first set of nodes and the second set to perform the multi-class inference task.

Example 21. An apparatus comprising:

means for receiving an indication to perform a single class inference task using a machine learning model that is trained to perform a multi-class inference task;
means for applying, during a timeframe of execution of the machine learning model hosted by the apparatus and in response to the indication, at least one mask mapped to the single class inference task, wherein the at least one mask defines, for the single class inference task a first set of nodes at the machine learning model activated to perform the single class inference task and a second set of nodes at the machine learning model deactivated while performing the single class inference task; and
means for reconfiguring the machine learning model to a state where the first set of nodes and the second set to perform the multi-class inference task.

Example 22. The apparatus of Example 21 further comprising means for performing at least one function in any of Examples 2-9.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

**Claims**

1.  A method comprising:

receiving, by a user equipment, an indication to perform a single class inference task using a machine learning model that is trained to perform a multi-class inference task;

in response to the indication, applying, by the user equipment and during a timeframe of execution of the machine learning model hosted by the user equipment, at least one mask mapped to the single class inference task, wherein the at least one mask defines, for the single class inference task a first set of nodes at the machine learning model activated to perform the single class inference task and a second set of nodes at the machine learning model deactivated while performing the single class inference task; and

reconfiguring, by the user equipment, the machine learning model to a state where the first set of nodes and the second set to perform the multi-class inference task.

2. The method of claim 1, wherein the machine learning model is trained at least in part to perform the multi-class inference task before being deployed to the user equipment.

3. The method of claim 1, wherein the indication to perform the single class inference task using the machine learning model is received from at least one another user equipment requesting the single class inference task.

4. The method of claim 1, wherein the indication to perform the single class inference task using the machine learning model is received in response to the single class inference task being detected by the user equipment.

5. The method of claim 1, wherein the timeframe is a pre-determined period of time or a time when the single class inference task is no longer an inference task inferred by the user equipment.

6. The method of claim 1, wherein the at least one mask is learned by providing, to the machine learning model, samples for classification as the single class inference task and profiling a plurality of nodes of the machine learning model to determine the second set of nodes not associated with classification by the machine learning model of the single class inference task.

7. The method of claim 6, wherein weights of the second set of nodes are below a threshold value indicating that the second set of nodes are not associated with the classification of the single class inference task.

8. The method of claim 1, wherein in response to the reconfiguring, the machine learning model performs the multi-class inference task.

9. The method of claim 1, wherein in response to applying the at least one mask, executing the machine learning model to perform the single class inference task, wherein the first set of nodes are executed to perform the single class inference task and the second set of nodes are deactivated and not executed while performing the single class inference task.

10. An apparatus comprising:

at least one processor; and
at least one memory including instructions which when executed by the at least one processor causes operations comprising:

receiving an indication to perform a single class inference task using a machine learning model that is trained to perform a multi-class inference task;
in response to the indication, applying, during a timeframe of execution of the machine learning model hosted by the apparatus, at least one mask mapped to the single class inference task, wherein the at least one mask defines, for the single class inference task a first set of nodes at the machine learning model activated to perform the single class inference task and a second set of nodes at the machine learning model deactivated while performing the single class inference task; and
reconfiguring the machine learning model to a state where the first set of nodes and the second set to perform the multi-class inference task.

11. The apparatus of claim 10, wherein the machine learning model is trained at least in part to perform the multi-class inference task before being deployed to the apparatus.

12. The apparatus of claim 10, wherein the indication to perform the single class inference task using the machine learning model is received from at least one another apparatus requesting the single class inference task.

13. The apparatus of claim 10, wherein the indication to perform the single class inference task using the machine learning model is received in response to the single class inference task being detected by the apparatus.

14. The apparatus of claim 10, wherein the timeframe is a pre-determined period of time or a time when the single class inference task is no longer an inference task inferred by the apparatus.

15. The apparatus of claim 10, wherein the at least one mask is learned by providing, to the machine learning model, samples for classification as the single class inference task and profiling a plurality of nodes of the machine learning model to determine the second set of nodes not associated with classification by the machine learning model of the single class inference task.

16. The apparatus of claim 15, wherein weights of the second set of nodes are below a threshold value indicating that the second set of nodes are not associated with the classification of the single class inference task.

17. The apparatus of claim 10, wherein in response to the reconfiguring, the machine learning model performs the multi-class inference task.

18. The apparatus of claim 10, wherein in response to applying the at least one mask, executing the machine learning model to perform the single class inference task, wherein the first set of nodes are executed to perform the single class inference task and the second set of nodes are deactivated and not executed while performing the single class inference task.

19. The apparatus of claim 10, wherein the apparatus comprises or is comprised in a user equipment.

**FIG. 1**

200

**FIG. 2**

**FIG. 3A**

300

302A

304A
304B
304C
304D
302B

Input Layer

Hidden Layer 1

Hidden Layer 2

Hidden Layer 3

Hidden Layer 4

Output Layer

Node 1 | Node 1 | Node 1 | Node 1

Node 2 | Node 2 | Node 2 | Node 2

Node 3 | Node 3 | Node 3 | Node 3

Node 4 | Node 4 | Node 4 | Node 4

**FIG. 3B**

**FIG. 4**

Receiving, by a user equipment, an indication to perform a single class inference task using a machine learning model that is trained to perform a multi-class inference task 510

In response to the indication, applying, by the user equipment and during a timeframe of execution of the machine learning model hosted by the user equipment, at least one mask mapped to the single class inference task, wherein the at least one mask defines, for the single class inference task a first set of nodes at the machine learning model activated to perform the single class inference task and a second set of nodes at the machine learning model deactivated while performing the single class inference task 515

Reconfiguring, by the user equipment, the machine learning model to a state where the first set of nodes and the second set to perform the multi-class inference task 520.

**FIG. 5**

**FIG. 6**

Europäisches Patentamt
European Patent Office
Office européen des brevets

# EUROPEAN SEARCH REPORT

**Application Number**

EP 25 21 7918

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/214656 A1 (VEMULAPALLI RAVITEJA [US] ET AL) 6 July 2023 (2023-07-06)<br>* abstract *<br>* paragraph [0006] - paragraph [0008] *<br>* paragraph [0021] - paragraph [0050]; figures 1-6 *<br>* paragraph [0052] - paragraph [0071] *<br>* paragraph [0082] *<br>----- | 1-19 | INV.<br>G06N3/045<br>G06N3/0495<br>G06N3/084 |
| A | KINGETSU HIROAKI ET AL: "Neural Network Module Decomposition and Recomposition with Superimposed Masks",<br>2023 INTERNATIONAL JOINT CONFERENCE ON NEURAL NETWORKS (IJCNN) IEEE,<br>18 June 2023 (2023-06-18), pages 1-10,<br>XP034386902,<br>DOI: 10.1109/IJCNN54540.2023.10191417<br>[retrieved on 2023-08-02]<br>* abstract *<br>* Sections II and IV; figures 1, 2 *<br>----- | 1-19 | |

TECHNICAL FIELDS
SEARCHED (IPC)

G06N

The present search report has been drawn up for all claims

| Place of search | Date of completion of the search | Examiner |
|---|---|---|
| The Hague | 18 March 2026 | Malatesta, Lori |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 7918

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | Publication date | Patent family member(s) | | Publication date |
|---|---|---|---|---|
| US 2023214656 A1 | 06-07-2023 | CN | 115699021 A | 03-02-2023 |
| | | EP | 4136585 A1 | 22-02-2023 |
| | | US | 2023214656 A1 | 06-07-2023 |
| | | WO | 2021251960 A1 | 16-12-2021 |

EPO FORM P0459

For more details about this annex : see Official Journal of the European Patent Office, No. 12/82